(19) Europäisches Patentamt

European Patent Office

Office européen des brevets

(11) Veröffentlichungsnummer: **0 002 656**

**B1**

(12) **EUROPÄISCHE PATENTSCHRIFT**

(21) Anmeldenummer: **78100946.9**

(22) Anmeldetag: **20.09.78**

(51) Int. Cl.³: **B 29 D 27/00,** B 29 F 1/022

(54) Verfahren zur Herstellung eines Kraftfahrzeugausrüstungsteils aus Kunststoff sowie nach dem Verfahren hergestelltes Erzeugnis

(30) Priorität: **15.12.77 DE 2755836**

(43) Veröffentlichungstag der Anmeldung:
**11.07.79 Patentblatt 79/14**

(45) Bekanntmachung des Hinweises auf die Patenterteilung:
**10.12.80 Patentblatt 80/25**

(84) Benannte Vertragsstaaten:
**BE FR GB NL SE**

(56) Entgegenhaltungen:
**DE - B - 2 408 777**
**DE - U - 1 878 158**
**FR - A - 2 212 121**

(73) Patentinhaber: **Gebr. Happich GmbH**
**Postfach 10 02 49 Clausenbrücke 1**
**D - 5600 Wuppertal 1 (DE)**

(72) Erfinder: **Mentzel, Bodo**
**Eichenstrasse 12a**
**D - 5620 Velbert 15 (DE)**
**Janz, Joachim**
**Jägerhofstrasse 16 b**
**D - 5600 Wuppertal 1 (DE)**
**Solcher, Joachim**
**Oberste-Homberg 18**
**D - 5620 Velbert 15 (DE)**

Courier Press, Leamington Spa, England.

EP 0 002 656 B1

Verfahren zur Herstellung eines Kraftfahrzeugausrüstungsteils aus Kunststoff sowie nach dem Verfahren hergestelltes Erzeugnis

Die Erfindung betrifft ein Verfahren zur Herstellung eines Kraftfahrzeugausrüstungsteils aus Kunststoff, welches schwenkbeweglich an der Fahrzeugkarosserie befestigbar ist, einen relativ harten Kern mit einer diesen umgebenden Polsterschicht und mindestens ein mit dem Kern verbundenes Scharnier aufweist. Die Erfindung betrifft weiterhin ein nach dem Verfahren gefertigtes Erzeugnis.

Kraftfahrzeugausrüstungsteile, wie z.B. Deckel, insbesondere Handschuhkastendeckel, Armaturenbrett- oder Wandabdeckungen, Griff- oder Sonnenblendenkörper und dergleichen, sind häufig mit einer zumindest einseitigen Polsterschicht aus Schaumkunststoff ausgerüstet. Die Ausrüstungsteile besitzen dabei, unabhängig davon, ob eine partielle oder allseitige Polsterschicht vorgesehen ist, einen die Polsterschicht aufnehmenden Trägerkörper. Solche Trägerkörper bestehen aus tiefgezogenen Blechschalen oder auch aus hohlen Kunststoffspritzgußteilen, die mit Schaumkunststoff ausgeschäumt und zumindest bereichsweise umschäumt sind. Trägerkörper aus Blech besitzen den Nachteil eines sehr hohen Einsatzgewichtes und einer erschwerten kostenbringenden Herstellung. Bei den bekannten als Kunststoffspritzgußteile hergestellten Trägerkörpern wurde bisher immer Wert auf eine materialsparende Käfigbauweise gelegt. An sich glatte Wände von Trägerkörpern wurden mit Nuten oder angeformten Rippen versehen, weil die Fachwelt bisher davon ausging, daß damit die Verankerung des Schaumstoffes am Trägerkörper verbessert wird. Trägerkörper in Käfigbauweise oder auch solche mit Nuten oder Rippen behindern beim Umschäumen einen gleichmäßigen Fluß des Schaumes. Durch die Rippen oder Nuten können Lufteinschlüsse eintreten und am fertigen Erzeugnis Lunker entstehen. Zufolge der unterschiedlichen Materialdichte des Schaumes in Höhe der Rippen od. dgl. am Trägerkörper erfolgen auch unterschiedliche Reaktionszeiten des Schaumes, wodurch sich Einfallstellen ergeben. Auch war bisher ein allseitiges Umschäumen von Trägerkörpern schwierig, weil keine zufriedenstellende Fixierungsmöglichkeit für den Trägerkörper in der Schäumform gefunden werden konnte. Bei schwenkbeweglich an einer Fahrzeugkarosserie anzubringenden Kraftfahrzeugausrüstungsteilen, die durch die Erfindung bevorzugt verbessert werden sollen, wurden bisher Scharniere an den Trägerkörper angeschraubt oder angeschweißt und die Verbindungsstellen durch einen zusätzlichen Arbeitsgang verkleidet.

Der Erfindung liegt nun die Aufgabe zugrunde, ein Verfahren aufzuzeigen, mit dem die Herstellung von Kraftfahrzeugausrüstungsteilen wesentlich vereinfacht wird, dessen Anwendung zu einer beträchtlichen Materialersparnis führt und mit dem Kraftfahrzeugausrüstungsteile mit optimaler Oberflächenbeschaffenheit hergestellt werden können. Ferner ist es Aufgabe der Erfindung, ein besonders einfaches und kostengünstig herzustellendes Kraftfahrzeugausrüstungsteil zu schaffen.

Das zur Lösung dieser Aufgabe erfindungsgemäß vorgesehene Verfahren zeichnet sich dadurch aus, daß zunächst ein der endgültigen Form des Kraftfahrzeugausrüstungsteils im verkleinerten Maßstab exakt entsprechender hohler und allseitig geschlossener Kern mit glatten Außenflächen und mit einem einstückig daran angeordneten Scharnier gebildet und hiernach der Kern mit einer Integralschaumstoffschicht konstanter Dicke umschäumt wird. Der Vorschlag, einen Trägerkörper als hohlen, allseitig geschlossenen Kern auszubilden, bringt den Vorteil einer beträchtlichen Materialeinsparung und eines entsprechend geringen Einsatzgewichtes. Durch die glatte Außenkontur des im verkleinerten Maßstab exakt der endgültigen Form des Kraftfahrzeugausrüstungsteils angepaßten Kerns wird ein optimales Fließverhalten und eine optimale Ausreaktion des Kunststoffschaumstoffes erzielt, und zwar insbesondere deshalb, weil erfindungsgemäß eine konstante Schaumstoffdicke vorgesehen wird, welche nicht zuletzt auch dadurch erreicht wird, daß der Kern an dem einstückig angeformten Scharnier exakt in der Schäumform fixiert werden kann.

Ein bevorzugter erfindungsgemäßer Verfahrensschritt kann darin bestehen, daß in einer Herstellungsform zwei über ein Filmscharnier miteinander verbundene einseitig ausgesteifte und anderseitig glatte Kernteile mit an einem der Kernteile angeformten Scharnier mit allen seinen Teilen, wie Lagerachsen, Gewerbe und Scharnierlaschen, in einem Ein-Schuß-Arbeitsgang spritzgußgeformt werden, die Kernteile über das Filmscharnier zu einem allseitig geschlossenen Hohlkörper aufeinandergeklappt und miteinander verriegelt werden und der Hohlkörper hiernach umschäumt wird. Ein solches Herstellungsverfahren zeichnet sich durch eine hohe Kostenersparnis und optimale Qualität des damit gefertigten Erzeugnisses aus. Durch die erfindungsgemäß vorgeschlagene innere Aussteifung des Kerns kann dieser beim späteren Ausreagieren des Schaumstoffes nicht zusammengedrückt werden, und damit kann auch keine spätere Ausbeulung durch eingeschlossene komprimierte Luft eintreten.

Ein nach dem erfindungsgemäßen Verfahren hergestelltes, ausschließlich aus Kunststoff bestehendes Erzeugnis ist als schwenkbeweglich an einer Fahrzeugkarosserie befestigbares Verkleidungs-, Abdeckungs-, Abstütz- oder Blendschutzelement ausgebildet und weist die Sonderheit auf, daß das Ausrüstungsteil aus einem hohlen, allseitig geschlossenen, innenseitig ausgesteifen und außenseitig glatten Träger körper und zumindest einem einstückig daran angeformten Scharnier und einer den Träger körper ringsum mit konstanter Dicke einbetten den Schicht aus Integralschaumstoff besteht.

Vorzugsweise besteht dabei der Träger körper aus zwei über ein Filmscharnier einstückig miteinander verbundenen und auf einandergeklappten Spritzgußteilen, die über einstückig angeformte Klipselemente an einander festlegbar sind. Ein derartiges erfindungsgemäßes Kraftfahrzeugausrüstungs teil ist relativ einfach und kostengünstig her zustellen, da nur zwei Arbeitsgänge, nämlich das Spritzgußformen des Trägerkörpers und dessen Umschäumen erforderlich sind. Durch die Innenaussteifung des Trägerkörpers, die beispielsweise durch eine Verrippung erzielt wird, kann der Trägerkörper relativ dünnwandig und damit materialsparend ausgebildet sein. Eine besonders hohe Kosteneinsparung im Vergleich zu den bekannten Vorbildern erbringt das einstückig mit allen seinen Einzelheiten an geformte Scharnier, wobei selbstverständlich auch zwei oder mehrere Scharniere einstückig in derselben Herstellungsform angeformt sein können. Der erfindungsgemäß vorgesehene konstante Abstand zwischen der Außen kontur des Trägerkörpers und der Außen kontur des Schaumkunststoffes garantiert eine saubere, in Sonderheit auch gleichmäßig ge narbte Oberfläche des Endproduktes ohne jeg liche Lunker oder Einfallstellen.

Das erfindungsgemäße Kraftfahrzeugaus rüstungsteil kann als Deckel, insbesondere Handschuhkastendeckel, Armaturenbrett polster, Düsenverkleidung, Fach- oder Wand abdeckung, Sonnenblendenkörper od. dgl. aus gebildet sein.

Der Gegenstand der Erfindung wird im folgenden anhand eines auf der Zeichnung dar gestellten Ausführungsbeispiels, das ein als Handschuhkastendeckel ausgebildetes Kraft fahrzeugausrüstungsteil zeigt, näher erläutert.

Es zeigen:

Fig. 1 den Handschuhkastendeckel in An sicht,

Fig. 2 einen Schnitt, folgend der Linie II—II nach Fig. 1,

Fig. 3 einen Schnitt, folgend der Linie III—III nach Fig. 1,

Fig. 4 einen Schnitt, folgend der Linie IV—IV nach Fig. 1,

Fig. 5 einen Querschnitt durch den Träger körper des Handschuhkastendeckels nach den Fig. 1 bis 4 in Spritzstellung und

Fig. 6 eine Einzelheit der Erfindung.

Das als Handschuhkastendeckel aus gebildete Kraftfahrzeugausrüstungsteil besteht aus einem Trägerkörper 1, der ringsum in eine Hülle aus Integralschaumstoff 2 eingebettet ist.

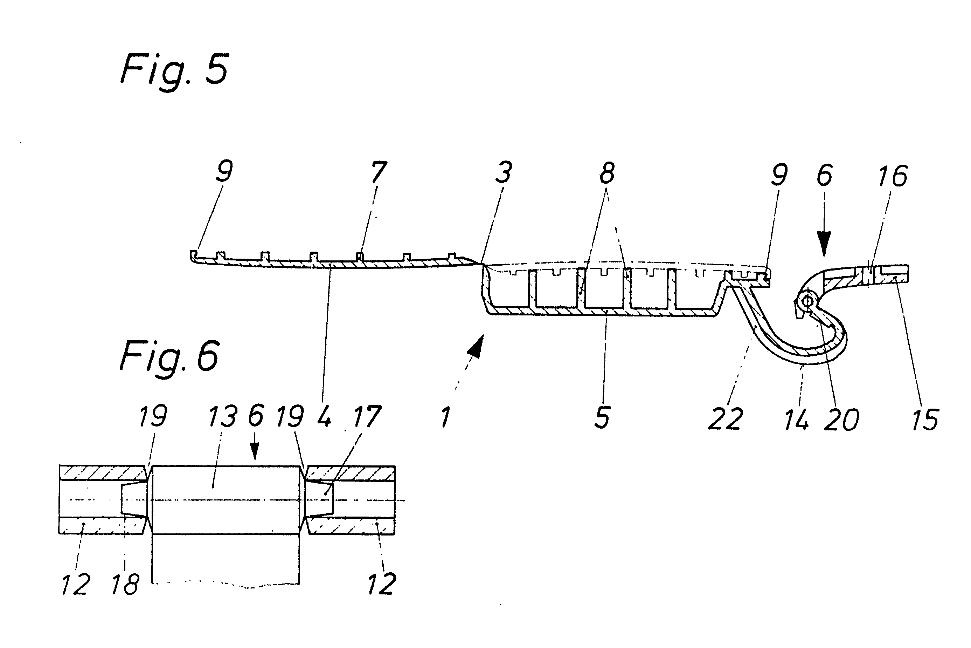

Der Trägerkörper 1 ist ein in einem Ein Schuß-Arbeitsgang gefertigter Kunststoff spritzgußkörper, dessen Spritzstellung in Fig. 5 gezeigt ist. Der Trägerkörper 1 besteht aus zwei über ein Filmscharnier 3 einstückig miteinander verbundenen Spritzgußteilen 4, 5, wobei das Spritzgußteil 5 noch zwei einstückig angeformte Scharniere 6 aufweist. Das Spritzgußteil 4 be sitzt eine relativ flache, einseitig glatte und an derseitig mit Versteifungsrippen 7 versehene Ausbildung und dient quasi als Deckel für das kastenförmig ausgebildete Spritzgußteil 5, das ebenfalls Versteifungsrippen 8 aufweist, die den Deckel bzw. das Spritzgußteil 4 abstützen. Die Trägerkörperteile 4, 5 werden vor dem Umschäumen über das Filmscharnier 3 aufein andergeklappt und durch sich hintergreifende Klipsnasen 9 aneinander festgelegt. Der so ge bildete Trägerkörper 1 ist ausreichend verwin dungssteif und besitzt eine glatte, exakt der gewünschten Kontur des Fertigteiles in verkleinertem Maßstab angepaßte Außenkon tur. Hierzu können auch muldenförmige Vertie fungen 10, beispielsweise für die Aufnahme eines Trinkgefäßes, gehören.

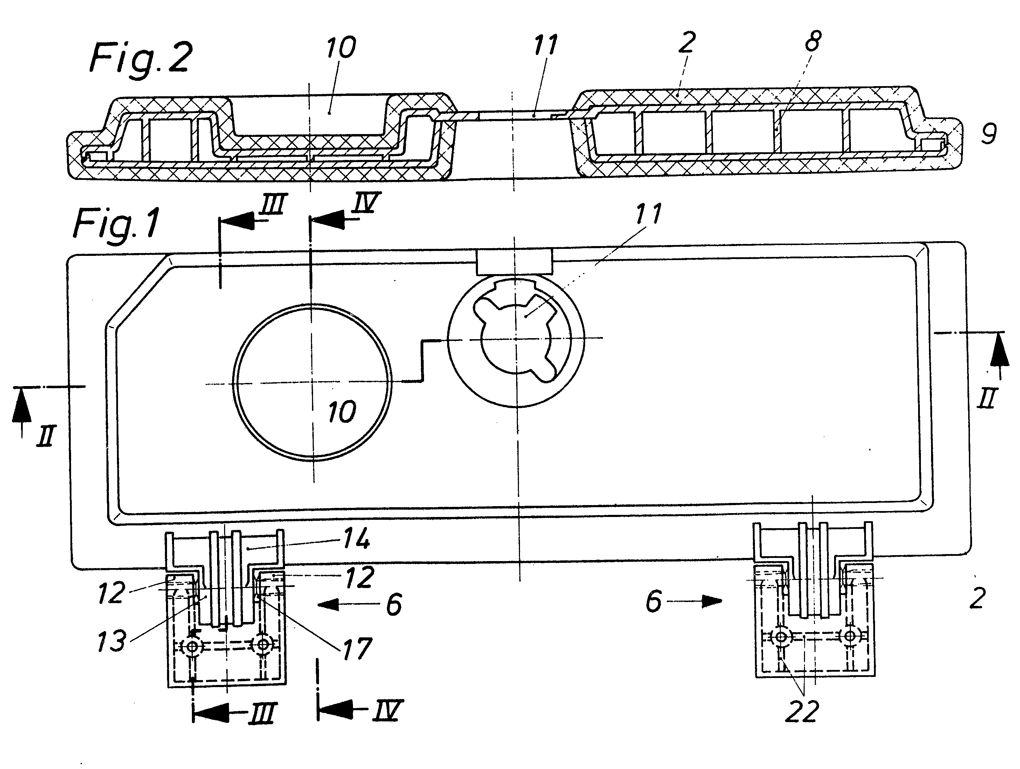

Der Trägerkörper 1 besitzt eine Öffnung 11, deren Randbereich, wie insbesondere Fig. 2 zeigt, schaumstofffrei bleibt und die als Schloß aufnahme dient.

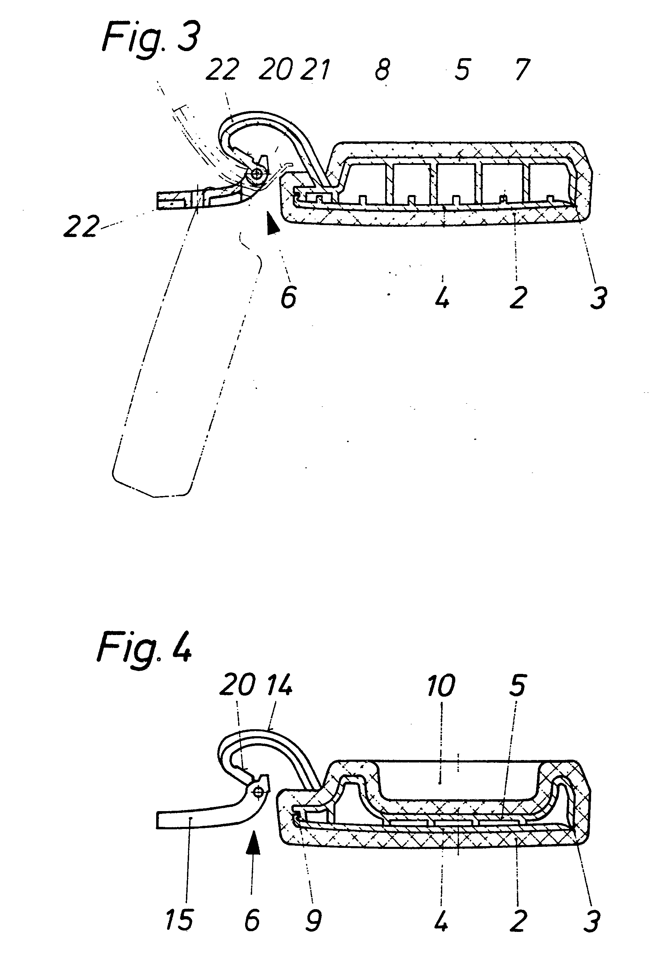

Die Scharniere 6 sind ohne jede Montage in einem einzigen Spritzgang mit dem Träger körper 1 gefertigt. Jedes Scharnier 6 (vergleiche auch Fig. 6) besteht aus zwei seitlichen Ge werbeaugen 12 und einem dazwischenliegen den Gewerbeauge 13. Das Gewerbeauge 13 ist mit einem Böckchen 14 einstückig, welches ebenfalls einstückig in die Trägerkörperhälfte 5 übergeht. Die Gewerbeaugen 12 sind einstückig mit einer Scharnier- oder Befestigungslasche 15 ausagebildet, die Durchbrüche 16 für Befestigungsschrauben aufweist. Das Ge werbeauge 13 besitzt in die benachbarten Ge werbeaugen 12 eingreifende Achsenden 17, die bis auf eine Abrißhaut mit einem Spalt 18 zur Innenwand der sie umgreifenden Gewerbe 17 ausgebildet sind. Die Trennung der Ge werbeaugen 12, 13 erfolgt jeweils durch einen Spalt 19. Während die Spalte 19 durch eine entsprechende Ausbildung der zweiteiligen nicht gezeigten Spritzgußform geschaffen werden, werden die Spalte 18 durch ent sprechende Schieber, die ebenfalls nicht gezeigt sind, gebildet. Damit ist der gesamte Träger körper 1 als allseitig geschlossener Hohlkörper mit daran sitzenden Scharnieren und diese mit ihren Einzelteilen in einem Spritzgußtakt herstellbar. Erfindungsgemäß können dabei an den Scharnieren 6 noch einstückige Anschlag nocken 20 angeformt sein, die den Hand schuhkastendeckel in seiner in Fig. 3 strich punktiert angedeuteten aufgeklappten Lage halten, indem sich die Anschlagnocken 20 gegen die Karosseriewand 21 abstützen. Auch kann das Böckchen 14 und die Befesti gungslasche 15 mit Versteifungsrippen 22 aus gebildet sein, die, wenn sie auf einander abge wandten Seiten liegen, das Entformen nicht be hindern.

Der Trägerkörper 1, der im verkleinerten Maßstab exakt der Außenkontur des Fertigteiles entspricht, wird mit einer Schicht aus Integralschaumstoff 2 umgeben, die, wie die Fig. 2 bis 4 zeigen, eine konstante Dicke besitzt. Durch die konstante Wanddicke des Integralschaumstoffes 2 wird ein optimales Fließverhalten und eine optmale Ausreaktion des Schaumstoffes erzielt, so daß sich ringsum eine gleich saubere genarbte Oberfläche einstellt. Beim Umschäumen des Trägerkörpers 1 ermöglichen die Scharniere 6 die exakte Fixierung des Trägerkörpers 1 in der Schäumform.

## Patentansprüche

1. Verfahren zur Herstellung eines Kraftfahrzeugausrüstungsteils aus Kunststoff, welches schwenkbeweglich an der Fahrzeugkarosserie befestigbar ist, einen relativ harten Kern mit einer diesen umgebenden Polsterschicht und mindestens ein mit dem Kern verbundenes Scharnier aufweist, dadurch gekennzeichnet, daß zunächst ein der endgültigen Form des Kraftfahrzeugausrüstungsteils im verkleinerten Maßstab exakt entsprechender hohler und allseitig geschlossener Kern mit glatten Außenflächen und mit einem einstückig daran angeordnetenScharnier gebildet wird und hiernach der Kern mit einer Integralschaumstoffschicht konstanter Dicke umschäumt wird.

2. Verfahren nach Patentanspruch 1, dadurch gekennzeichnet, daß in einer Herstellungsform zwei über ein Filmscharnier miteinander verbundene einseitig ausgesteifte und anderseitig glatte Kernteile mit an einem der Kernteile angeformten Scharnier mit allen seinen Teilen, wie Lagerachsen, Gewerbe und Scharnierlaschen, in einem Ein-Schuß-Arbeitsgang spritzgußgeformt werden, die Kernteile über das Filmscharnier zu einen allseitig geschlossenen Hohlkörper aufeinandergeklappt und miteinander verriegelt werden und der Hohlkörper hiernach umschäumt wird.

3. Kraftfahrzeugausrüstungsteil hergestellt nach dem Verfahren gemäß Patentanspruch 1, welches als schwenkbeweglich an der Fahrzeugkarosserie befestigbares Verkleidungs-, Abdeckungs-, Abstütz- oder Blendschutzelement ausgebildet ist und ausschließlich aus Kunststoff besteht, dadurch gekennzeichnet, daß das Ausrüstungteil aus einem hohlen, allseitig geschlossenen, innenseitig ausgesteiften und außenseitig glatten Trägerkörper (1) mit zumindest einem einstückig daran angeformten Scharnier (6) und einer den Trägerkörper (1) ringsum mit konstanter Dicke einbettenden Schicht aus Integralschaumstoff (2) besteht.

4. Kraftfahrzeugausrüstungsteil nach Patentanspruch 3, dadurch gekennzeichnet, daß der Trägerkörper (1) aus zwei über ein Filmscharnier (3) einstückig miteinander verbundenen und aufeinandergeklappten Spritzgußteilen (4, 5) besteht.

5. Kraftfahrzeugausrüstungsteil nach Patentanspruch 4, dadurch gekennzeichnet, daß die aufeinandergeklappten Spritzgußteile (4, 5) über einstückig angeformte Klipselemente (9) aneinander festgelegt sind.

6. Kraftfahrzeugausrüstungsteil nach einem oder mehreren der Patentansprüche 3 bis 5, dadurch gekennzeichnet, daß es als Deckel, insbesondere Handschuhkastendeckel, Armaturenbrettpolster, Düsenverkleidung, Fach- oder Wandabdeckung, Sonnenblendenkörper od. dgl. ausgebildet ist.

## Revendications

1. Procédé de fabrication d'une pièce d'équipement d'automobile en matière plastique pouvant être fixée sur la carrosserie du véhicule de façon à pouvoir pivoter, comportant un noyau relativement dur entouré par une couche de rembourrage et au moins une charnière reliée au noyau, caractérisé en ce que l'on forme d'abord un noyau creux et fermé de toutes parts, à surfaces extérieures lisses, qui correspond exactement à la forme finale de la pièce d'équipement d'automobile à échelle réduite, et sur lequel une charnière est formée d'un seul tenant avec lui et l'on enrobe ensuite le noyau d'une couche de mousse intégrale d'épaisseur constante.

2. Procédé selon la revendication 1, caractérisé en ce que l'on moule par injection en une seule opération dans un moule de fabrication deux parties de noyau reliées entre elles par une charnière pelliculaire et lisses ailleurs dont l'une comporte une charnière qui y est formée, pourvue de tous ses éléments, tels que les axes, les yeux et les pattes, on rabat les parties du noyau au moyen de la charnière pelliculaire en un corps creux fermé de toutes parts et on les verrouille entre elles et l'on enrobe ensuite le corps creux de mousse.

3. Pièce d'équipement d'automobile fabriquée selon le precédé conforme à la revendication 1, qui est conformée en élément de revêtement, de recouvrement, d'appui ou paresoleil pouvant être fixé à la carrosserie du véhicule de façon qu'il puisse pivoter et est exclusivement en matière plastique, caractérisé en ce que la pièce d'équipement est constituée par un corps de support (1) creux, fermé de toutes parts, rigidifié intérieurement et extérieurement lisse, comportant au moins une charnière (6) qui y est formée d'un seul tenant et une couche de mousse intégrale (2) enrobant le corps de support (1) sur tout son pourtour avec une épaisseur constante.

4. Pièce selon la revendication 1, caractérisée en ce que le corps de support (1) comprend deux parties moulées par injection (4, 5) reliées entre elles d'un seul tenant par une charnière pelliculaire (3) et rabattues l'une sur l'autre.

5. Pièce selon la revendication 4, caractérisée en ce que les parties moulées par injection (4, 5) rabattues l'une sur l'autre sont fixées l'une à l'autre par des éléments de fixation (9) qui y song formés d'une seule pièce avec elle.

6. Pièce selon l'une quelconque des revendications 3 à 5, caractérisée en ce que l'elle est conformée en couvercle, notamment en couvercle de boîte à gants, en rembourrage de tableau de bord, en revêtement de gicleur, en recouvrement de panneau ou de paroi, en pare-soleil ou en une pièce analogue.

## Claims

1. A method of fabricating a plastics motor vehicle accessory which is tiltably fastenable to the vehicle body, which includes a comparatively hard core surrounded by padding and which is provided with at least one hinge joined to the core, characterized in that first a hollow, all-round closed core of a configuration corresponding exactly to but being dimensioned smaller than the final shape of the motor vehicle accessory is formed, the core having smooth external faces and the at least one hinge integrally formed therewith, and in that thereafter the core is externally foamed to form a foamed cover of uniform thickness and having a continuous outer skin.

2. A method according to claim 1, characterized in that two core components joined to one another by a flexible thickness-reduced section and being reinforced on one side but smooth on the other one are injection-moulded in one mould by a single squirt thereinto, one of the core components having the at least one integrally-formed hinge including all components thereof such as hinge pins, hinge eyes and hinge wings, that the core components are folded, by means of the thickness-reduced section, one upon the other and locked to one another so as to form a hollow body closed all-round and in that thereafter the hollow body is foam-covered.

3. An all-plastics motor vehicle accessory fabricated by a method according to claim 1, the accessory being designed as a lining, a covering, a support or as an anti-glare element and being tiltably fastenable to the vehicle body, characterized in that the accessory comprises the hollow, all-round closed core carrier (1), the interior of which is reinforced while its external faces are smooth and which is provided with the at least one integrally-formed hinge (6), and the foamed cover (2) of uniform thickness including the continuous outer skin, which cover entirely embeds the carrier (1).

4. A motor vehicle accessory according to claim 1, characterized in that the carrier (1) comprises two injection-moulded components (4, 5) folded one upon the other with the aid of the flexible thickness-reduced section (3) formed integrally between them.

5. A motor vehicle accessory according to claim 4, characterized in that the injection-moulded components (4, 5), when they have benn folded one upon the other, are locked to one another by integrally formed clip-in elements (9).

6. A motor vehicle accessory according to one or more of the claims 3 to 5, characterized in that the accessory is constructed as a lid, particularly as a glove-box lid, as a dashboard padding, an air-vent liner, a shelf or wall cover, as a sun visor or the like.

Fig.1

Fig.2

Fig. 3

22 20 21 8 5 7

22 6 4 2 3

Fig. 4

20 14 10 5

15 6 9 4 2 3

Fig. 5

Fig. 6

0002656